# FASCICULE DE BREVET EUROPEEN

(11) **EP 3 768 528 B1**
(45) Date de publication et mention de la délivrance du brevet: **15.11.2023**
(21) Numéro de dépôt: 19719545.6
(22) Date de dépôt: 18.03.2019
(51) Int. Cl.: B60C 15/06, B60C 23/04

(54) **PNEUMATIQUE POIDS-LOURD EQUIPE D'UN MODULE DE COMMUNICATION RADIOFREQUENCE**
LKW-REIFEN MIT EINEM HOCHFREQUENZKOMMUNIKATIONSMODUL
HEAVY GOODS VEHICLE TYRE EQUIPPED WITH A RADIOFREQUENCY COMMUNICATION MODULE

(30) Priorité: 22.03.2018 FR 1852488
(43) Date de publication de la demande: 27.01.2021
(73) Titulaire: COMPAGNIE GENERALE DES ETABLISSEMENTS MICHELIN, 63000 Clermont-Ferrand (FR)
(72) Inventeur: JOULIN, Emmanuel, 63040 CLERMONT-FERRAND Cedex 9 (FR); GLIBERT, Séverine, 63040 CLERMONT-FERRAND Cedex 9 (FR); MARCHAL, Jean-Louis, 63040 CLERMONT-FERRAND Cedex 9 (FR)
(74) Mandataire: Roussy, Delphine
(86) Numéro de dépôt international: PCT/FR2019/050600
(87) Numéro de publication internationale: WO 2019/180358

(56) Documents cités:
- EP-A1- 3 196 056
- WO-A1-2012/030321
- WO-A1-2016/193457
- WO-A1-2018/011512
- DE-A1-102007 043 077
- JP-A- 2001 225 618
- US-A1- 2010 122 757

## Description

### Domaine de l'invention

La présente invention est relative aux pneumatiques, et plus particulièrement à un pneumatique équipé d'un module de communication radiofréquence.

### État de la technique

On connaît déjà dans l'état de la technique, notamment d'après EP 1 977 912 B1, un pneumatique de type poids-lourd équipé d'un module de communication radiofréquence. Dans ce document, le module de communication radiofréquence comprend un transpondeur à identification par radiofréquence passif muni d'une antenne rayonnante hélicoïdale formant dipôle. Ce type de transpondeur est généralement désigné par le sigle anglais RFID. Un tel transpondeur peut stocker des données, par exemple relatives à l'identification, au type et/ou à la date de fabrication du pneumatique.

Le pneumatique décrit dans EP 1 977 912 B1, tel qu'illustré aux figures 1 à 3, est destiné à être monté sur une jante creuse (15° drop centre). Ce pneumatique comprend une armature de carcasse radiale, constituée d'une unique couche d'armature de carcasse formée d'éléments de renforcement insérés entre deux couches de calandrage de mélange caoutchouteux, une armature de sommet, elle-même coiffée radialement d'une bande de roulement, la bande de roulement étant réunie à deux bourrelets par l'intermédiaire de deux flancs. La couche d'éléments de renforcement de l'armature de carcasse est ancrée dans chacun des bourrelets par retournement autour d'une tringle pour former une partie principale de la couche d'armature de carcasse s'étendant d'une tringle à l'autre et un retournement de la couche d'armature de carcasse dans chacun des bourrelets. Le retournement de la couche d'armature de carcasse est séparé de la partie principale de la couche d'armature de carcasse par une première couche de mélange caoutchouteux s'étendant radialement depuis la tringle jusqu'au-delà de l'extrémité du retournement de la couche d'armature de carcasse et le retournement de la couche d'armature de carcasse s'étend axialement vers l'extérieur au contact d'une deuxième couche de mélange caoutchouteux, elle-même au moins au contact d'une troisième couche de mélange caoutchouteux formant la surface extérieure du pneumatique dans la zone du bourrelet, la troisième couche de mélange caoutchouteux étant destinée notamment à venir au contact de la jante. La troisième couche de mélange caoutchouteux est radialement vers l'extérieur au contact d'une quatrième couche de mélange caoutchouteux formant la surface extérieure d'un flanc. Ce pneumatique est tel que, dans une coupe méridienne :
- la distance entre l'extrémité du retournement de la couche d'armature de carcasse et le point radialement le plus intérieur du cercle circonscrit à la tringle est de l'ordre de 30 % de la distance entre le point axialement le plus extérieur de la partie principale de la couche d'armature de carcasse et le point radialement le plus intérieur du cercle circonscrit à la tringle, et
- le module de communication radiofréquence est disposé dans le bourrelet à l'interface entre la première et la deuxième couche de mélange caoutchouteux et radialement entre l'extrémité du retournement de la nappe carcasse et l'extrémité radialement extérieure de la première couche de mélange caoutchouteux.

Ce document précise que cette position permet une transmission optimale des données enregistrées dans le module de communication radiofréquence en évitant notamment qu'une partie du module de communication ne s'étende dans le volume du bourrelet compris radialement entre l'extrémité du retournement et la tringle.

Le document WO2018/011512 A2 présente une architecture de pneumatique semblable au premier document. Le document EP3196056A1 présente un penuamtique équipé d'un tranpondeur radiofréquence et propose une solution pour incorporer le dit transpondeur dans l'architecture du pneumatique. Le document US2010/0122757A1 présente une structure de pneumatique équipé d'une étiquette RFID et propose un positionnement optimisé de l'étiquette RFID dans l'architecture du pneumatique.

### Description brève de l'invention

L'invention a pour objet un pneumatique selon la revendication 1, dans lequel, dans une coupe méridienne:
- un module de communication radiofréquence est disposé dans le bourrelet à l'interface entre la deuxième et la troisième couche de mélange caoutchouteux et
- radialement extérieurement à une distance supérieure à 25 mm du point radialement le plus extérieur de la tringle.

La demanderesse a constaté que cette position du module de communication radiofréquence est à une distance suffisante des fils de renfort métalliques pour permettre une communication radiofréquence très satisfaisante avec un lecteur extérieur. Cette position est aussi favorable pour la tenue mécanique du module de communication en service.

Cette position a aussi l'avantage d'être très favorable pour la mise en place du module de communication lors de la fabrication du pneumatique.

En effet, le module de communication est positionné sur la deuxième couche de mélange caoutchouteux à une distance d'au moins 25 mm du point radialement le plus extérieur de la tringle qui est stable mécaniquement puisqu'au-delà de la zone de flexion maximum du bourrelet. Cette zone de flexion maximum du bourrelet étant comprise entre l'extrémité radialement extérieur de la tringle, le point B, et la zone de couplage délimitée par le point C. De ce fait les sollicitations mécaniques sont moins importantes que dans la zone de flexion maximum du bourrelet.

Et, le module de communication est enfoui au sein de la structure du pneumatique ce qui le préserve des agressions potentielles provenant de l'extérieur comme les chocs de trottoir par exemple tout en assurant une très bonne communication radiofréquence. En effet, le module de communication est situé dans la partie extérieure du bourrelet et loin des éléments de renforts potentiellement métalliques de l'armature de carcasse.

De plus, le positionnement à l'interface entre la deuxième couche de mélange caoutchouteux et la troisième couche de mélange caoutchouteux assure d'éloigner le module de communication de façon suffisante par rapport à l'extrémité du retournement de la couche d'armature de carcasse qui constitue une singularité de rigidité au sein de l'architecture du pneumatique. Cet éloignement, en particulier par l'intermédiaire de la deuxième couche de mélange caoutchouteux, est bénéfique à l'endurance du pneumatique.

Enfin, ce positionnement du module de communication peut permettre une coextrusion de l'ensemble constitué par les troisième et quatrième couches de mélange caoutchouteux qui procure un gain de productivité non négligeable dans la confection d'une ébauche à cru d'un pneumatique.

Au sens de l'invention, une jante creuse (15° drop center) ou jante à seat coincé est une jante monobloc, telle que définie dans l'ETRTO, dont les sièges destinés à recevoir les bourrelets du pneumatique présentent une forme tronconique, l'angle formé avec la direction axiale étant sensiblement équivalent à 15°. Ces sièges sont par ailleurs prolongés par des crochets de jante de hauteur réduite par rapport à des crochets de jantes à bases plates dont les sièges de jante présentent des formes sensiblement cylindriques.

La position du point E axialement le plus extérieur de la partie principale de l'armature de carcasse est déterminée sur un pneumatique monté et gonflé selon les conditions nominales. Cette détermination peut être réalisée par exemple selon une technique de tomographie.

Les positions des points A radialement le plus intérieur et B radialement le plus extérieur du cercle circonscrit à la tringle peuvent également être déterminées selon une technique de tomographie ou bien sont déterminées sur une coupe d'un pneumatique, dont l'écartement des bourrelets est le même que lorsque le pneumatique est monté sur la jante de montage préconisée par l'ETRTO, celui-ci étant donc ni monté ni gonflé.

La distance entre le point axialement le plus extérieur de la partie principale de la couche d'armature de carcasse et le point A radialement le plus intérieur du cercle circonscrit à la tringle est mesurée sur un pneumatique monté et gonflé selon les conditions nominales. Cette mesure peut être réalisée par exemple selon une technique de tomographie.

Les autres distances, notamment mesurées depuis le point A radialement le plus intérieur du cercle circonscrit à la tringle, peuvent également être mesurées selon une technique de tomographie ou bien sont mesurées sur une coupe d'un pneumatique, dont l'écartement des bourrelets est le même que lorsque le pneumatique est monté sur la jante de montage préconisée par l'ETRTO, celui-ci étant donc ni monté ni gonflé.

On entend ici par l'expression « axialement vers l'extérieur » que cela se situe extérieurement au pneumatique par rapport à la partie principale de la couche d'armature de carcasse dans une direction parallèle à l'axe naturel de rotation du pneumatique.

Ici, la première couche de mélange caoutchouteux est un mélange de remplissage de l'espace délimité par la partie principale de la couche d'armature de carcasse et le retournement de la couche d'armature de carcasse nommée gomme de remplissage (en anglais « bead filler »).

La deuxième couche de mélange caoutchouteux est un élément tampon servant à assurer la géométrie du retournement de la couche d'armature de carcasse notamment au niveau des zones de couplage et de découplage entre la partie principale et le retournement de la couche d'armature de carcasse.

Enfin la troisième couche de mélange caoutchouteux est une gomme de protection assurant le contact du pneumatique avec la roue lors du montage.

Avantageusement, le retournement de la couche d'armature de carcasse et la partie principale de la couche d'armature de carcasse sont couplés radialement vers l'extérieur à partir d'un point C du retournement de la couche d'armature de carcasse situé à une distance comprise entre 30 et 55 %, de la distance entre l'extrémité du retournement de la couche d'armature de carcasse et le point A radialement le plus intérieur du cercle circonscrit à la tringle et le module de communication radiofréquence est disposé radialement extérieurement au-delà du point C.

Ce positionnement du module de communication radialement extérieur au point C permet d'éloigner le module de communication de la zone de flexion maximum du bourrelet. Par conséquent, les sollicitations mécaniques subies par le module de communication sont moins fortes grâce à son positionnement radial au-delà du point C.

Selon un mode de réalisation préférentiel, radialement vers l'extérieur à partir du point C du retournement de la couche d'armature de carcasse, le retournement de la couche d'armature de carcasse et la partie principale de la couche d'armature de carcasse sont couplés sur une longueur comprise entre 15 et 65 % de la distance entre l'extrémité du retournement de la couche d'armature de carcasse et le point A radialement le plus intérieur du cercle circonscrit à la tringle, pour être ensuite découplés par la première couche de mélange caoutchouteux jusqu'à l'extrémité du retournement de la couche d'armature de carcasse et le module de communication radiofréquence est disposé radialement en regard de cette zone de couplage et le module de communication radiofréquence est disposé radialement en regard de cette zone de couplage entre le retournement et la partie principale de l'armature de carcasse.

Ce positionnement du module de communication est idéal en éloignant le module de communication à la fois de la zone de flexion maximum du bourrelet et de l'extrémité du retournement de la couche d'armature de carcasse. Ainsi, la présence du module de communication est sans effet sur l'endurance du pneumatique mais on préserve également l'intégrité physique du module de communications tout en assurant une bonne performance de radiocommunication

Selon un mode de réalisation préférentiel, la longueur de découplage est comprise entre 5 et 40 % de la distance entre l'extrémité du retournement de la couche d'armature de carcasse et le point A radialement le plus intérieur du cercle circonscrit à la tringle et de préférence comprise entre 15 et 35 % de ladite distance entre l'extrémité du retournement de la couche d'armature de carcasse et le point A radialement le plus intérieur du cercle circonscrit à la tringle.

De préférence selon l'invention, le retournement de la couche d'armature de carcasse et la partie principale de la couche d'armature de carcasse sont couplés sur une longueur comprise entre 25 et 40 % de la distance entre l'extrémité du retournement de la couche d'armature de carcasse et le point A radialement le plus intérieur du cercle circonscrit à la tringle.

Au sens de l'invention, la partie principale de la couche d'armature de carcasse et le retournement de la couche d'armature de carcasse sont dits couplés si les éléments de renforcement respectifs de la partie principale de la couche d'armature de carcasse et du retournement de la couche d'armature de carcasse sont séparés par une épaisseur de mélange caoutchouteux sensiblement constante et d'au plus 5 mm sur une longueur supérieure à 15 % de la distance entre l'extrémité du retournement de la couche d'armature de carcasse et le point A radialement le plus intérieur du cercle circonscrit à la tringle. L'épaisseur de mélange caoutchouteux séparant les éléments de renforcement respectifs de la partie principale de la couche d'armature de carcasse et du retournement de la couche d'armature de carcasse est mesurée selon la direction normale aux éléments de renforcement de la partie principale de la couche d'armature de carcasse. Avantageusement selon l'invention, les éléments de renforcement respectifs de la partie principale de la couche d'armature de carcasse et du retournement de la couche d'armature de carcasse sont séparés par une épaisseur de mélange caoutchouteux sensiblement constante d'au plus 3.5 mm et de préférence ils sont séparés par une épaisseur de mélange caoutchouteux sensiblement constante d'au moins 0.8 mm et de préférence encore par une épaisseur de mélange caoutchouteux sensiblement constante d'au moins 2.5 mm.

Au sens de l'invention, une épaisseur de mélange caoutchouteux sensiblement constante séparant les éléments de renforcement respectifs de la partie principale de la couche d'armature de carcasse et du retournement de la couche d'armature de carcasse est une épaisseur qui ne varie pas de plus de 0.5 mm. Les variations d'épaisseur ne sont alors dues qu'aux phénomènes de fluage lors de la fabrication et de la cuisson du pneumatique.

Au sens de l'invention, la première couche de mélange caoutchouteux peut être constituée de plusieurs mélanges caoutchouteux dont les propriétés de rigidité et plus spécifiquement dont les modules d'élasticité sous tension à 10 % d'allongement peuvent varier. Dans le cas de plusieurs mélanges caoutchouteux constituant la première couche, ils forment avantageusement un gradient de rigidité décroissant depuis la tringle vers l'extrémité radialement extérieure de ladite première couche.

Selon un mode de réalisation préféré de l'invention, l'armature de sommet comportant au moins une couche d'éléments de renforcement, le ratio de la distance radiale entre le point axialement le plus extérieur de la partie principale de la couche d'armature de carcasse et le point radialement le plus extérieur de la jante nominale, c'est-à-dire le point radialement le plus extérieur du crochet de jante, sur la distance radiale entre l'extrémité axialement extérieure de la couche d'éléments de renforcement de l'armature sommet axialement la plus large et le point radialement le plus extérieur de la jante nominale est inférieur ou égal à 55 %.

La distance radiale entre le point axialement le plus extérieur de la partie principale de la couche d'armature de carcasse et le point radialement le plus extérieur de la jante nominale est mesurée sur un pneumatique monté et gonflé selon les conditions nominales. Cette mesure peut être réalisée par exemple selon une technique de tomographie.

La distance radiale entre l'extrémité axialement extérieure de la couche d'éléments de renforcement de l'armature sommet axialement la plus large et le point radialement le plus extérieur de la jante nominale peut également être mesurée selon une technique de tomographie, le pneumatique étant monté et gonflé selon les conditions nominales.

De préférence encore selon l'invention, le ratio de la distance radiale entre le point E axialement le plus extérieur de la partie principale de la couche d'armature de carcasse et le point radialement le plus extérieur de la jante nominale sur la distance radiale entre l'extrémité axialement extérieure de la couche d'éléments de renforcement de l'armature sommet axialement la plus large et le point radialement le plus extérieur de la jante nominale est inférieur à 53 %.

Les essais ont montré que les pneumatiques ainsi réalisés selon l'invention et dont la masse est inférieure à celle de pneumatiques de conception plus usuelle, comportant par exemple des couches d'éléments de renforcement supplémentaires de type raidisseurs, présentent des performances en termes d'endurance, et notamment en termes d'endurance des zones des bourrelets, au moins aussi bonnes que celles desdits pneumatiques de conception plus usuelle, voire supérieures.

Avantageusement selon l'invention, l'extrémité radialement intérieure de la deuxième couche de mélange caoutchouteux est radialement comprise entre le point radialement le plus extérieur du cercle circonscrit à la tringle et le point radialement le plus intérieur du cercle circonscrit à la tringle. Ce positionnement est déterminé sur une coupe d'un pneumatique, dont l'écartement des bourrelets est le même que lorsque le pneumatique est monté sur la jante de montage préconisée par l'ETRTO, celui-ci étant donc ni monté ni gonflé.

Selon un mode de réalisation préféré de l'invention, le module d'élasticité sous tension à 10 % d'allongement des couches de calandrage de la couche d'armature de carcasse est compris entre 4 et 16 MPa et de préférence entre 8 et 12 MPa. Ces valeurs permettent notamment de définir le compromis souhaité entre les performances d'endurance du pneumatique et ses performances en termes de résistance au roulement.

De préférence selon l'invention, le module d'élasticité sous tension à 10 % d'allongement de la première couche de mélange caoutchouteux est inférieur ou égal au module d'élasticité sous tension à 10 % d'allongement du calandrage de la couche d'armature de carcasse. Ce choix permet notamment de concentrer les efforts de cisaillement au sein de la première couche de mélange caoutchouteux.

De préférence encore selon l'invention, le module d'élasticité sous tension à 10 % d'allongement de la première couche de mélange caoutchouteux est supérieur à 50 % du module d'élasticité sous tension à 10 % d'allongement du calandrage de la couche d'armature de carcasse et de préférence est supérieur à 70 % du module d'élasticité sous tension à 10 % d'allongement du calandrage de la couche d'armature de carcasse. Ce choix permet de maintenir les efforts de cisaillement au sein de la première couche de mélange caoutchouteux tout en assurant de bonnes performances d'endurance.

Avantageusement selon l'invention, le module d'élasticité sous tension à 10 % d'allongement de la deuxième couche de mélange caoutchouteux est inférieur à 150 % du module d'élasticité sous tension à 10 % d'allongement du calandrage de la couche d'armature de carcasse. Selon cette réalisation avantageuse de l'invention, la deuxième couche de mélange caoutchouteux confère suffisamment de rigidité pour assurer une bonne tenue en endurance du pneumatique lors des appuis sur les crochets de jante tout en assurant des performances en termes de résistance au roulement satisfaisantes.

Selon un mode de réalisation préféré de l'invention, pour favoriser le compromis entre les performances d'endurance et de résistance au roulement, le module d'élasticité sous tension à 10 % d'allongement de la première couche de mélange caoutchouteux est supérieur ou égal au module d'élasticité sous tension à 10 % d'allongement de la troisième couche de mélange caoutchouteux qui est lui-même supérieur ou égal au module d'élasticité sous tension à 10 % d'allongement de la quatrième couche de mélange caoutchouteux.

Au sens de l'invention, la partie principale de la couche d'armature de carcasse et le retournement de la couche d'armature de carcasse sont dits découplés si, radialement à l'extérieur de la zone de couplage, l'épaisseur de mélange caoutchouteux séparant les éléments de renforcement respectifs de la partie principale de la couche d'armature de carcasse et du retournement de la couche d'armature de carcasse est supérieure à celle de la zone de couplage. Les éléments de renforcement respectifs de la partie principale de la couche d'armature de carcasse et du retournement de la couche d'armature de carcasse sont alors avantageusement séparés par une épaisseur de mélange caoutchouteux comprise entre 3 et 8 mm, ladite épaisseur de mélange caoutchouteux étant mesurée selon la direction normale aux éléments de renforcement de la partie principale de la couche d'armature de carcasse entre les éléments de renforcement respectifs de la couche la partie principale de la couche d'armature de carcasse et du retournement de la couche d'armature de carcasse. De préférence selon l'invention, dans la zone de découplage, les éléments de renforcement respectifs de la partie principale de la couche d'armature de carcasse et du retournement de la couche d'armature de carcasse sont séparés d'au plus 6 mm et de préférence ils sont séparés d'au moins 4 mm.

Selon un mode de réalisation avantageux de l'invention, la zone de découplage peut être constituée d'une première partie, dite de transition, prolongeant la zone de couplage dans laquelle l'épaisseur de mélange caoutchouteux séparant les éléments de renforcement respectifs de la partie principale de la couche d'armature de carcasse et du retournement de la couche d'armature de carcasse augmente et d'une deuxième partie radialement la plus extérieure dans laquelle l'épaisseur de mélange caoutchouteux séparant les éléments de renforcement respectifs de la partie principale de la couche d'armature de carcasse et du retournement de la couche d'armature de carcasse est sensiblement constante.

Selon cette variante de réalisation de l'invention, l'augmentation de l'épaisseur de la première couche de mélange caoutchouteux permet de venir compenser la diminution de la tension dans les éléments de renforcement de l'armature de carcasse lorsque l'on s'approche de l'extrémité de son retournement pour absorber les contraintes de cisaillement entre la partie principale de la couche d'armature de carcasse et son retournement.

Avantageusement encore, la longueur de découplage est comprise entre 5 et 40 % de la distance entre l'extrémité du retournement de la couche d'armature de carcasse et le point radialement le plus intérieur du cercle circonscrit à la tringle et de préférence comprise entre 15 et 35 % de la distance entre l'extrémité du retournement de la couche d'armature de carcasse et le point radialement le plus intérieur du cercle circonscrit à la tringle.

Selon un mode préféré de réalisation de l'invention, dans tout plan méridien, sur une longueur du retournement de la couche d'armature de carcasse délimitée radialement entre l'extrémité dudit retournement de la couche d'armature de carcasse et un point situé à une distance du point radialement le plus intérieur du cercle circonscrit à la tringle égale à 65 % de la distance entre l'extrémité du retournement de la couche d'armature de carcasse et le point radialement le plus intérieur du cercle circonscrit à la tringle, tout point du retournement de la couche d'armature de carcasse est à une distance de la surface extérieure du pneumatique inférieure à 10 mm. De préférence encore, tout point du retournement de la couche d'armature de carcasse est à une distance de la surface extérieure du pneumatique inférieure à 10 mm sur une longueur du retournement de la couche d'armature de carcasse délimitée radialement entre l'extrémité dudit retournement et un point situé à une distance du point radialement le plus intérieur du cercle circonscrit à la tringle égale à 50 % de la distance entre l'extrémité du retournement de la couche d'armature de carcasse et le point radialement le plus intérieur du cercle circonscrit à la tringle.

Avantageusement encore selon l'invention, dans tout plan méridien, sur une distance radiale supérieure à 4 mm, et de préférence supérieure à 10 mm, démarrant radialement à l'extérieur de l'extrémité du retournement de la couche d'armature de carcasse et à une distance radiale de l'extrémité du retournement de la couche d'armature de carcasse égale à 2.5 fois le diamètre d'un élément de renforcement de l'armature de carcasse et s'étendant radialement vers l'extérieur, l'épaisseur, mesurée selon la direction normale aux éléments de renforcement du retournement de la couche d'armature de carcasse à l'extrémité du retournement de la couche d'armature de carcasse, de la quatrième couche de mélange caoutchouteux formant la surface extérieure d'un flanc est sensiblement constante.

Avantageusement encore selon l'invention, dans tout plan méridien, sur une distance radiale supérieure à 4 mm, et de préférence supérieure à 10 mm, démarrant radialement à l'intérieur de l'extrémité du retournement de la couche d'armature de carcasse et à une distance radiale de l'extrémité du retournement de la couche d'armature de carcasse égale à 2.5 fois le diamètre d'un élément de renforcement de l'armature de carcasse et s'étendant radialement vers l'intérieur, l'épaisseur, mesurée selon la direction normale aux éléments de renforcement du retournement de la couche d'armature de carcasse à l'extrémité du retournement de la couche d'armature de carcasse, de la quatrième couche de mélange caoutchouteux formant la surface extérieure d'un flanc est sensiblement constante.

Au sens de l'invention, l'expression une épaisseur sensiblement constante signifie qu'elle ne varie pas de plus de 0.5 mm. Ces variations d'épaisseur ne sont dues qu'aux phénomènes de fluage lors de la fabrication et de la cuisson du pneumatique.

La quatrième couche de mélange caoutchouteux ainsi réalisée selon l'invention semble permettre de contribuer au meilleur positionnement de la première couche de mélange caoutchouteux et à sa mise en place pour assurer le couplage et éventuellement le découplage de la partie principale de la couche d'armature de carcasse et du retournement de la couche d'armature de carcasse.

Selon un mode de réalisation avantageux de l'invention, dans tout plan méridien, dans chaque bourrelet, le pneumatique comporte une armature de contention entourant la tringle et un volume de mélange caoutchouteux directement au contact de la tringle.

Une telle armature de contention permet lors de l'utilisation du pneumatique de limiter les évolutions de forme de la tringle et ainsi de conserver des performances notamment en termes d'endurance satisfaisantes. En effet, le pneumatique selon l'invention dont la structure conduit à son allégement pourrait, dans certains cas d'utilisation ou types de roulage, conduire à une évolution géométrique dans la zone du bourrelet potentiellement nuisible aux performances en termes d'endurance du pneumatique. La présence d'une armature de contention telle que proposée permet de retarder voire de prévenir une telle évolution géométrique. Avantageusement encore selon l'invention, l'armature de contention est constituée d'une couche d'éléments de renforcement textiles de type polyamide aliphatique.

Avantageusement selon l'invention, les tringles sont des tringles paquets, c'est-à-dire des tringles formées d'un assemblage de fils gommés enroulés autour d'une forme, de préférence de forme hexagonale.

Selon un mode de réalisation de l'invention, notamment pour améliorer encore les performances en termes d'endurance du pneumatique, l'armature de carcasse est formée de câbles dont la structure est fortement pénétrée de mélanges caoutchouteux. Il peut par exemple s'agir de câbles dont la construction permet d'augmenter leur pénétrabilité par les mélanges caoutchouteux. Il peut encore s'agir de câbles dans lesquels des mélanges caoutchouteux sont insérés lors de la fabrication des câbles eux-mêmes. Il s'agit alors par exemple de câbles à au moins deux couches, au moins une couche interne étant gainée d'une couche constituée d'une composition de caoutchouc non réticulable, réticulable ou réticulée, de préférence à base d'au moins un élastomère diénique.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqués précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

De préférence, le module de communication est constitué du transpondeur radiofréquence encapsulé dans une masse de gomme d'enrobage isolante électriquement.

De préférence, le transpondeur comportant une puce électronique couplée à une antenne rayonnante définissant un premier axe longitudinal, ce premier axe longitudinal est orienté circonférentiellement.

Cette orientation est perpendiculaire aux fils de la nappe de carcasse et est très favorable pour la tenue mécanique du transpondeur ainsi que pour la qualité de lecture du transducteur.

Selon un premier mode de réalisation du module de communication, l'antenne rayonnante comportant deux tronçons d'antennes hélicoïdales, la puce électronique est connectée galvaniquement aux deux tronçons d'antennes hélicoïdales.

Selon un deuxième mode de réalisation du module de communication, le transpondeur radiofréquence du module de communication comprend en plus une antenne primaire connectée électriquement à la puce électronique, l'antenne primaire est couplée inductivement à l'antenne rayonnante, et l'antenne rayonnante est une antenne dipôle constituée d'un ressort hélicoïdal monobrin définissant le premier axe longitudinal.

### Description des Figures

Les différents objets de l'invention seront mieux compris au moyen de la description détaillée qui suit, conjointement avec les figures annexés sur lesquelles les mêmes numéros de référence désignent partout des parties identiques, et dans lesquelles :
- la figure 1 illustre une vue méridienne d'un schéma d'un pneumatique selon un mode de réalisation de l'invention ;
- la figure 2, présente une représentation schématique agrandie de la zone du bourrelet du pneumatique de la figure 1 ;
- la figure 3 présente un transpondeur radiofréquence usuel ;
- la figure 4 présente une vue éclatée schématique d'un module de communication ;
- la figure 5 présente une vue en perspective d'un transpondeur radiofréquence selon un mode de réalisation de l'invention dans une configuration où la partie électronique est située à l'intérieur de l'antenne rayonnante ;
- la figure 6 présente une vue en perspective d'un transpondeur radiofréquence selon l'invention dans une configuration où la partie électronique est située à l'extérieur de l'antenne rayonnante ; et
- la figure 7 présente une vue en perspective de la partie électronique d'un transpondeur radiofréquence dans une configuration où la partie électronique est située à l'intérieur de l'antenne rayonnante.

Les figures ne sont pas représentées à l'échelle pour en simplifier la compréhension.

### Description détaillée de l'invention

Dans ce qui suit, les termes « gomme caoutchouteuse », « mélange caoutchouteux », « gomme » et « mélange » sont utilisés de façon équivalente pour identifier des constituants caoutchouteux du pneumatique.

Des câbles sont dits inextensibles lorsque lesdits câbles présentent sous une force de traction égale à 10 % de la force de rupture un allongement relatif au plus égal à 0,2 %.

Des câbles sont dits élastiques lorsque lesdits câbles présentent sous une force de traction égale à la charge de rupture un allongement relatif au moins égal à 3 % avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10 % d'allongement (conditions normales de température et d'hygrométrie selon la norme AFNOR-NFT-40101 de décembre 1979).

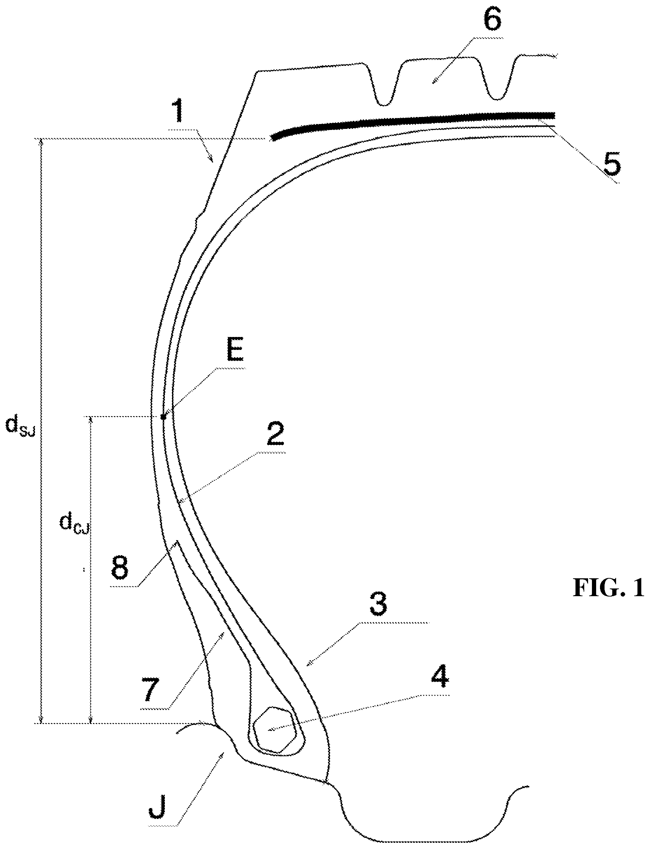

La figure 1 ne représente qu'une demi-vue d'un pneumatique qui se prolonge de manière symétrique par rapport au plan médian circonférentiel, ou plan équatorial, d'un pneumatique.

Sur la figure 1, le pneumatique 1 est de dimension 12 R 22.5. Le pneumatique 1 comprend une armature de carcasse radiale 2 ancrée dans deux bourrelets 3. L'armature de carcasse 2 est frettée au sommet du pneumatique par une armature de sommet 5, elle-même coiffée d'une bande de roulement 6.

L'armature de carcasse 2, formée d'une seule couche de câbles métalliques, est enroulée dans chacun des bourrelets 3 autour d'une tringle 4 et forme dans chacun des bourrelets 3 un retournement de la couche d'armature de carcasse 7 présentant une extrémité 8.

L'armature de carcasse 2 est constituée d'éléments de renforcements entre deux couches de calandrage dont le module d'élasticité sous tension à 10 % d'allongement est égal à 9.8 MPa.

Les éléments de renforcements de l'armature de carcasse 2 sont des câbles 19.18 dont l'allongement à rupture est égal à 2.5 %.

Les câbles d'armature de carcasse du pneumatique 1 sont des câbles métalliques à couches de structure 1+6+12, non frettés, constitués d'un noyau central formé d'un fil, d'une couche intermédiaire formée de six fils et d'une couche externe formée de douze fils.

La figure 1 illustre le pneumatique monté sur sa jante nominale J ; le point E axialement le plus extérieur de la partie principale de la couche d'armature de carcasse 2 est ainsi déterminé le pneumatique étant gonflé à sa pression nominale, par exemple par tomographie.

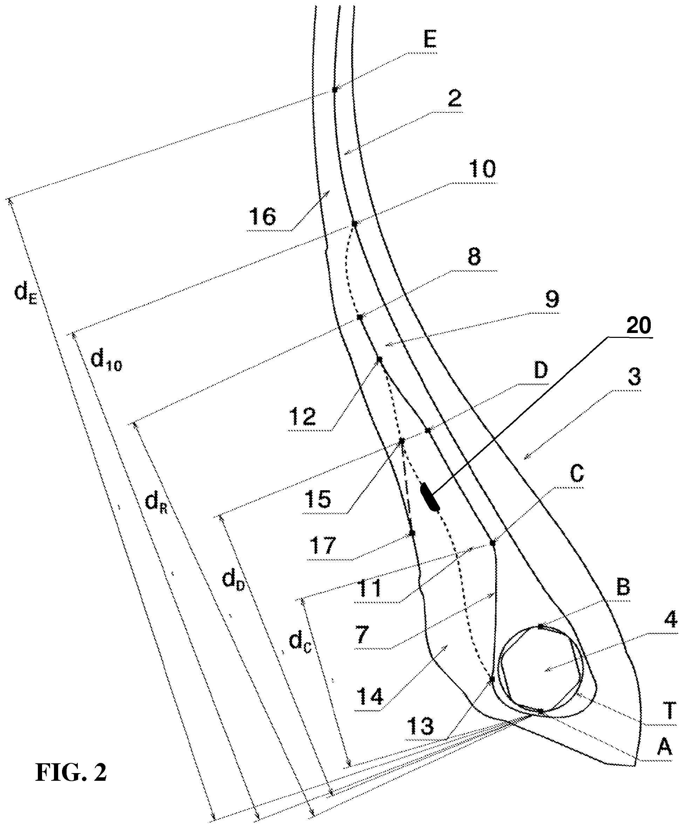

La figure 2 illustre de manière agrandie une représentation schématique en coupe d'un bourrelet 3 du pneumatique dans lequel on retrouve une partie de la couche d'armature de carcasse 2 enroulée autour d'une tringle 4 pour former un retournement 7 avec une extrémité 8.

Sur cette figure 2, est matérialisé le cercle T circonscrit à la tringle 4 et apparaît le point A radialement le plus intérieur dudit cercle T. Ce point A est défini sur une coupe radiale du pneumatique, dont l'écartement des bourrelets est le même que lorsque le pneumatique est monté sur la jante de montage préconisée par l'ETRTO, celui-ci n'étant pas monté sur une jante.

On détermine également le point B radialement le plus extérieur du cercle T.

La distance d_{E} entre le point E et le point A est égale à 128 mm.

La distance d_{R} entre le point 8 et le point A est égale à 90 mm.

Le ratio de la distance d_{R} sur la distance d_{E} est égal à 70 % et donc compris entre 45 et 90 %.

La distance radiale d_{CJ} entre le point E axialement le plus extérieur de la partie principale de la couche d'armature de carcasse et le point radialement le plus extérieur de la jante nominale est égale à 108.2 mm.

La distance radiale d_{SJ} entre l'extrémité axialement extérieure de la couche d'éléments de renforcement de l'armature sommet axialement la plus large et le point radialement le plus extérieur de la jante nominale est égale à 206.7 mm.

Le ratio de la distance d_{CJ} sur la distance d_{SJ} est égal à 52,3 % et donc inférieur à 53 %.

Le retournement 7 de la couche d'armature de carcasse vient se coupler à la partie principale de la couche d'armature de carcasse 2 à partir du point C, tel que la distance d_{C} entre le point C et le point A est égale à 37 mm.

Le ratio de la distance d_{C} sur la distance d_{R} est égal à 41 % et donc compris entre 30 et 55 %.

Le retournement 7 de la couche d'armature de carcasse est ensuite découplé de la partie principale de la couche d'armature de carcasse 2 à partir du point D, tel que la distance d_{D} entre le point D et le point A est égale à 66 mm et telle que la longueur de couplage entre le point C et le point D est égale à 29 mm et donc comprise entre 25 et 40 % de la distance d_{R}. La longueur de couplage est mesurée selon la droite passant par les points C et D.

L'épaisseur de couplage entre la partie principale de la couche d'armature de carcasse 2 et le retournement 7 de la couche d'armature de carcasse, mesurée selon la direction normale aux éléments de renforcement de la partie principale de la couche d'armature de carcasse 2 entre les éléments de renforcement respectifs de la partie principale de la couche d'armature de carcasse et du retournement de la couche d'armature de carcasse 2, est sensiblement constante et égale à 2.9 mm.

La longueur de découplage entre le point D et le point 8 est égale à 21 mm et donc comprise entre 15 et 35 % de la distance d_{R}. La longueur de découplage est mesurée selon la droite passant par les points D et 8.

Le retournement 7 de la couche d'armature de carcasse 2 est séparé de la partie principale de la couche d'armature de carcasse 2 par une première couche de mélange caoutchouteux 9, présentant une extrémité radialement extérieure 10 à une distance d₁₀ du point A égale à 117 mm. La première couche de mélange caoutchouteux 9 présente un module d'élasticité sous tension à 10 % d'allongement égal à 7.8 MPa et donc inférieur au module d'élasticité sous tension à 10 % d'allongement des couches de calandrage de l'armature de carcasse 2.

La première couche de mélange caoutchouteux 9 est profilée pour venir en appui sur la tringle 4 et assurer le couplage et découplage entre le retournement de la couche d'armature de carcasse 7 et la partie principale de la couche d'armature de carcasse 2.

Axialement à l'extérieur du retournement 7 de la couche d'armature de carcasse est représentée la deuxième couche de mélange caoutchouteux 11 dont l'extrémité radialement extérieure 12 est radialement à l'intérieur de l'extrémité 8 du retournement 7 de la couche d'armature de carcasse. Selon un autre mode de réalisation non représenté, l'extrémité radialement extérieure de la deuxième couche de mélange caoutchouteux est radialement extérieure à l'extrémité 8 du retournement 7 de la couche d'armature de carcasse.

L'extrémité radialement intérieure 13 de la deuxième couche de mélange caoutchouteux 11 est radialement comprise entre les points A et B, respectivement radialement le plus intérieur et radialement le plus extérieur du cercle circonscrit à la tringle.

La deuxième couche de mélange caoutchouteux 11 présente un module d'élasticité sous tension à 10 % d'allongement égal à 12.5 MPa et donc supérieur au module d'élasticité sous tension à 10 % d'allongement des couches de calandrage de l'armature de carcasse 2.

Au contact de la deuxième couche de mélange caoutchouteux 11 et radialement sous la tringle, on trouve la troisième couche de mélange caoutchouteux 14, dont l'extrémité axialement la plus extérieure 15 est radialement à l'intérieur de l'extrémité 12 de la deuxième couche de mélange caoutchouteux 11.

La troisième couche de mélange caoutchouteux 14 présente un module d'élasticité sous tension à 10 % d'allongement égal à 7.1 MPa.

Axialement au contact de la première couche de mélange caoutchouteux 9, de la deuxième couche de mélange caoutchouteux 11, et de la troisième couche de mélange caoutchouteux 14, se trouve la quatrième couche de mélange caoutchouteux 16. L'extrémité 17 radialement intérieure de la quatrième couche de mélange caoutchouteux 16 est radialement intérieure à l'extrémité 15 de la troisième couche de mélange caoutchouteux 14.

La quatrième couche de mélange caoutchouteux 16 présente un module d'élasticité sous tension à 10 % d'allongement égal à 3.1 MPa.

Dans des zones situées de part et d'autre de l'extrémité 8 du retournement 7 de la couche d'armature de carcasse, le profil de la quatrième couche de mélange caoutchouteux 16 est tel que ladite quatrième couche de mélange caoutchouteux 16 présente une épaisseur, mesurée selon la direction normale aux éléments de renforcement de l'armature de carcasse 2 à l'extrémité 8 du retournement 7, sensiblement constante et égale à 3.3 mm, sur deux longueurs radiales d'environ 5 mm à partir de chacun des deux points situés de part et d'autre de l'extrémité 8 à des distances de la dite extrémité 8 égales à 2.5 mm correspondant à plus de 2.5 fois le diamètre des câbles d'armature de carcasse, celui-ci étant égal à 0.9 mm.

Le bourrelet 3 comporte aussi un module de communication radiofréquence 20 disposé axialement à l'interface entre la deuxième couche 11 et la troisième couche 14 de mélanges caoutchouteux. Ce module de communication 20 est placé radialement extérieurement relativement au point B de la tringle, à une distance supérieure à 25 mm. Et dans l'exemple de la figure 2, en regard de la zone de couplage entre la partie principale 2 de l'armature de carcasse et le retournement 7 de cette armature de carcasse, c'est-à-dire entre les deux points C et D de la figure 2. Le module de communication 20 est de préférence disposé sensiblement au milieu de cette zone de couplage, entre C et D.

Cette position protège bien mécaniquement le transpondeur radiofréquence du module de communication et la demanderesse a constaté expérimentalement que cette position permet une bonne robustesse de communication avec un lecteur extérieur. Comme indiqué implicitement sur la figure 2, le module de communication est placé dans le pneumatique de sorte que son antenne radiofréquence de type dipôle soit positionnée circonférentiellement. Ainsi, l'antenne radiofréquence est perpendiculaire aux éléments de renforcement de la couche d'armature de carcasse de type radiale. Ainsi, malgré que les éléments de renforcement puissent être métalliques, la perpendicularité relative de l'orientation de l'antenne radiofréquence par rapport aux éléments de renforts métalliques perturbe à minima le fonctionnement radiofréquence de l'antenne.

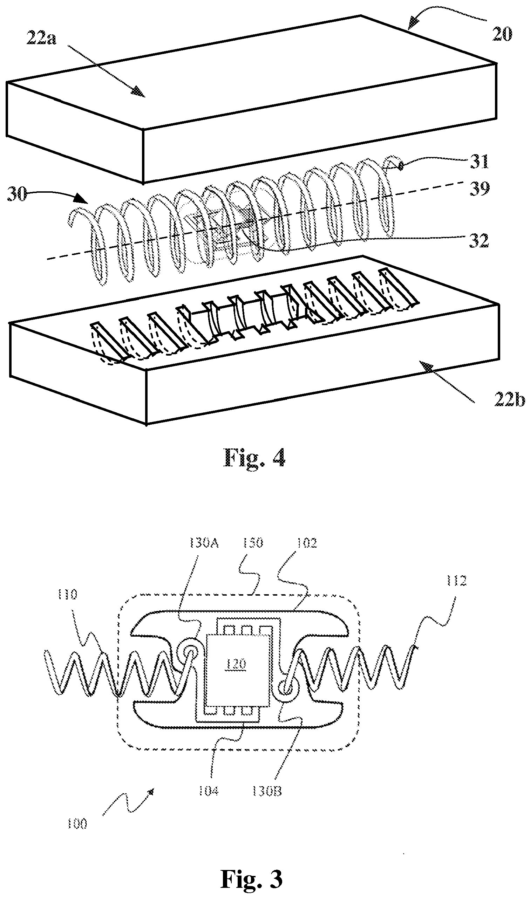

La figure 4 présente un éclaté d'un module de communication 20. Ce module 20 comprend un transpondeur radiofréquence 30 noyé entre deux couches 22a et 22b d'un mélange caoutchouteux isolant électriquement non-vulcanisé. L'épaisseur de chaque couche est de l'ordre de 1 mm, la longueur de l'ordre de 50 à 70 mm et sa largeur de l'ordre de 10 à 20 mm. Un tel module de communication est un produit semi-fini apte à être intégré dans la structure du pneumatique 1 lors de la fabrication de celui-ci.

La position choisie pour placer le module de communication 20 est particulièrement favorable. La dépose du semi-fini non vulcanisé est faite à la surface de la deuxième couche de mélange caoutchouteux 11 pendant la confection du pneumatique avant la mise en place d'un complexe associant les troisième et quatrième couches de mélange caoutchouteux.

Le mélange caoutchouteux 22 d'enrobage du transpondeur radiofréquence 30 contient 100 pce (parties pour 100 parties d'élastomère en masse) de polymère tel qu'EPDM (ethylene propylene diene monomer rubber), caoutchouc butyle, néoprène ou d'élastomère diénique tel que SBR (styrene-butadiene rubber), polybutadiène, caoutchouc naturel, ou polyisoprène.

Le mélange peut contenir des charges de type silice, noir de carbone, craie, kaolin :
- avec une charge de type silice à un taux maximum de 50 pce,
- avec une charge de type noir de carbone de grade ASTM supérieur à 700, à un taux inférieur à 50 pce ;
- avec une charge de type noir de carbone de grade inférieur ou égal à 500, à un taux maximum de 20 pce.
- il est possible d'ajouter ou de remplacer ces charges par de la craie ou du kaolin.

De tels taux et types de charges permettent de garantir une permittivité relative inférieure à 6.5, notamment à une fréquence de 915 MHz.

La rigidité à cuit du mélange d'enrobage est de préférence inférieure ou proche de celles des mélanges caoutchouteux adjacents.

Dans un premier mode de réalisation, le transpondeur radiofréquence du module de communication 20 est un transpondeur radiofréquence usuel, tel que présenté à la figure 3 et décrit dans le document WO 2012/030321 A1. Ce transpondeur 100 comprend une puce électronique 120 fixée sur un support ou PCB (printed circuit board) 102 et galvaniquement connectée via les pistes conductrices 104 et les soudures 130 à deux demi-antennes 110 et 112. Les antennes sont des ressorts hélicoïdaux à âme en fil d'acier. La partie électronique et au moins une partie des antennes sont noyées dans un mélange caoutchouteux isolant 150. Les antennes définissent un axe de symétrie 39.

Le transpondeur radiofréquence 30 du module de communication 20 tel que présenté à la figure 4 correspond à un deuxième mode de réalisation du module de communication 20 qui va être décrit maintenant.

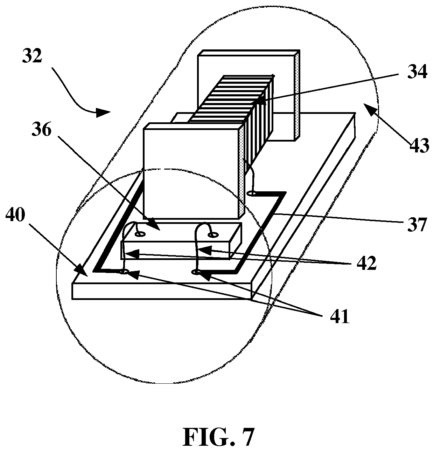

Le transpondeur radiofréquence 30 selon ce deuxième mode de réalisation du module de communication 20 comprend une partie électronique 32 et une antenne rayonnante 31 apte à communiquer avec un lecteur radiofréquence externe. Il comprend en plus (voir figure 7) une antenne primaire 34 connectée électriquement à la puce électronique 36 et couplée inductivement à l'antenne rayonnante 31. L'antenne rayonnante est une antenne dipôle constituée d'un ressort hélicoïdal monobrin définissant un premier axe longitudinal.

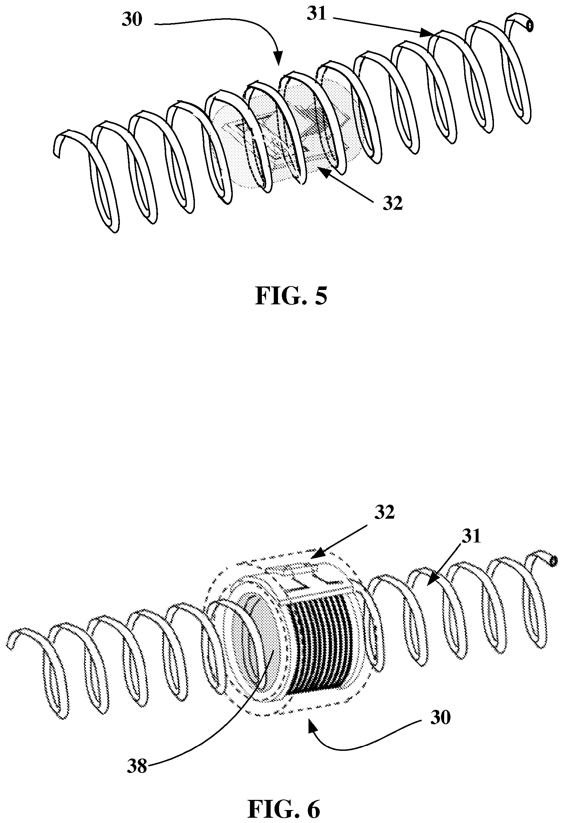

La figure 5 présente un transpondeur radiofréquence 30 dans une configuration où la partie électronique 32 est située à l'intérieur de l'antenne rayonnante 31. La forme géométrique de la partie électronique 32 est circonscrite dans un cylindre dont le diamètre est inférieur ou égal au diamètre intérieur du ressort hélicoïdal. L'enfilement de la partie électronique 32 dans l'antenne rayonnante 31 s'en trouve facilité. Le plan médian de l'antenne primaire se trouve dans la zone centrale de l'antenne rayonnante et sensiblement superposé au plan médian de l'antenne rayonnante.

La figure 6 présente un transpondeur radiofréquence 30 dans une configuration où la partie électronique 32 se trouve à l'extérieur de l'antenne rayonnante 31. La forme géométrique de la partie électronique 32 présente une cavité cylindrique 38 dont le diamètre est supérieur ou égal au diamètre extérieur de l'antenne rayonnante 31. L'enfilement de l'antenne rayonnante 31 dans la cavité cylindrique 38 de la partie électronique s'en trouve ainsi facilité. Le plan médian de l'antenne primaire se trouve dans la zone centrale de l'antenne rayonnante et sensiblement dans le plan médian de l'antenne rayonnante 31.

La figure 7 présente la partie électronique 32 d'un transpondeur radiofréquence 30 destiné à une configuration où la partie électronique 32 est située à l'intérieur de l'antenne rayonnante 31. La partie électronique 32 comprend une puce électronique 36 et une antenne primaire 34 connectée électriquement à la puce électronique 36 par l'intermédiaire d'un circuit imprimé 40. L'antenne primaire est ici constituée par une micro bobine CMS (acronyme de Composant Monté en Surface). La connexion électrique entre les composants sur le circuit imprimé est réalisée à l'aide de pistes en cuivre 37 terminées par des pastilles 41 en cuivre. La connexion électrique des composants sur le circuit imprimé est réalisée à l'aide de la technique dite du « wire bonding » par des fils 42 en or entre le composant et les pastilles 41. L'ensemble constitué du circuit imprimé 40, de la puce électronique 36 et de l'antenne primaire 34 est noyé dans une masse rigide 43 en résine époxy haute température isolante électriquement constituant la partie électronique 32 du transpondeur radiofréquence 30.

Ce transpondeur radiofréquence 30 a l'avantage d'être beaucoup plus résistant mécaniquement que les transpondeurs usuels.

## Revendications

1. Pneumatique (1), destiné à être monté sur une jante creuse « 15° drop centre », comprenant une armature de carcasse radiale, constituée d'une unique couche d'armature de carcasse (2) formée d'éléments de renforcement insérés entre deux couches de calandrage de mélange caoutchouteux, ledit pneumatique (1) comprenant une armature de sommet (5), elle-même coiffée radialement d'une bande de roulement (6), ladite bande de roulement (6) étant réunie à deux bourrelets (3) par l'intermédiaire de deux flancs, la couche d'éléments de renforcement de l'armature de carcasse (2) étant ancrée dans chacun des bourrelets (3) par retournement autour d'une tringle (4) pour former une partie principale de la couche d'armature de carcasse (2) s'étendant d'une tringle (4) à l'autre et un retournement (7) de la couche d'armature de carcasse dans chacun des bourrelets (3), ledit retournement (7) de la couche d'armature de carcasse étant séparé de la partie principale de la couche d'armature de carcasse (2) par une première couche de mélange caoutchouteux (9) s'étendant radialement depuis la tringle (4) jusqu'au-delà de l'extrémité (8) du retournement (7) de la couche d'armature de carcasse et ledit retournement (7) de la couche d'armature de carcasse étant axialement vers l'extérieur au contact d'une deuxième couche de mélange caoutchouteux (11), elle-même au moins au contact d'une troisième couche de mélange caoutchouteux (14) formant la surface extérieur du pneumatique dans la zone du bourrelet (3) , ladite troisième couche de mélange caoutchouteux (14) étant destinée notamment à venir au contact de la jante, ladite troisième couche de mélange caoutchouteux (14) étant radialement vers l'extérieur au contact d'une quatrième couche de mélange caoutchouteux (16) formant la surface extérieure dudit flanc, dans une coupe méridienne dudit pneumatique (1) :
- la distance entre l'extrémité (8) du retournement (7) de la couche d'armature de carcasse et le point radialement le plus intérieur (A) du cercle circonscrit à la tringle (4) est comprise entre 45 et 90 % de la distance entre le point axialement le plus extérieur (E) de la partie principale de la couche d'armature de carcasse (2) et le point radialement le plus intérieur (A) du cercle circonscrit à la tringle (4),
- le retournement (7) de la couche d'armature de carcasse et la partie principale de la couche d'armature de carcasse (2) sont les seules couches d'éléments de renforcement dont l'allongement à rupture est inférieur à 6 % présentes dans une zone du flanc constituant au moins 90 % de la zone comprise entre l'extrémité (8) du retournement (7) de la couche d'armature de carcasse et le point radialement le plus extérieur (B) de la tringle (4), ledit pneumatique étant **caractérisé en ce qu'**un module de communication radiofréquence (20) est disposé dans le bourrelet (3) l'interface entre la deuxième (11) et la troisième (14) couche de mélange caoutchouteux et radialement extérieurement relativement à une distance supérieure à 25 mm du point radialement le plus extérieur (B) de la tringle (4).

2. Pneumatique (1) selon la revendication 1, dans lequel le retournement (7) de la couche d'armature de carcasse et la partie principale de la couche d'armature de carcasse (2) sont couplés radialement vers l'extérieur à partir d'un point C du retournement (7) de la couche d'armature de carcasse situé à une distance comprise entre 30 et 55 % de la distance entre l'extrémité (8) du retournement (7) de la couche d'armature de carcasse et le point radialement le plus intérieur (A) du cercle circonscrit à la tringle (4) et dans lequel le module de communication radiofréquence (20) est disposé radialement extérieurement au-delà du point C; la partie principale de la couche d'armature de carcasse et le retournement de la couche d'armature de carcasse étant dits couplés si les éléments de renforcement respectifs de la partie principale de la couche d'armature de carcasse et du retournement de la couche d'armature de carcasse sont séparés par une épaisseur de mélange caoutchouteux sensiblement constante, c'est -à-dire une épaisseur qui ne varie pas de plus de 0.5 mm, et d'au plus 5 mm sur une longueur supérieure à 15 % de la distance entre l'extrémité du retournement de la couche d'armature de carcasse et le point A radialement le plus intérieur du cercle circonscrit à la tringle.

3. Pneumatique (1) selon la revendication 2, dans lequel radialement vers l'extérieur à partir dudit point C du retournement (7) de la couche d'armature de carcasse, le retournement (7) de la couche d'armature de carcasse et la partie principale de la couche d'armature de carcasse (2) sont couplés sur une longueur comprise entre 15 et 65 % de la distance entre l'extrémité (8) du retournement (7) de la couche d'armature de carcasse et le point A radialement le plus intérieur du cercle circonscrit à la tringle (4), pour être ensuite découplés par la première couche de mélange caoutchouteux (9) jusqu'à l'extrémité (8) du retournement (7) de la couche d'armature de carcasse et dans lequel le module de communication radiofréquence (20) est disposé radialement en regard de ladite zone de couplage entre le retournement (7) et la partie principale de l'armature de carcasse (2); la partie principale de la couche d'armature de carcasse et le retournement de la couche d'armature de carcasse étant dits découplés si, radialement à l'extérieur de la zone de couplage, l'épaisseur de mélange caoutchouteux séparant les éléments de renforcement respectifs de la partie principale de la couche d'armature de carcasse et du retournement de la couche d'armature de carcasse est supérieure à celle de la zone de couplage

4. Pneumatique selon l'une des revendications 2 et 3, dans lequel la longueur de découplage est comprise entre 5 et 40 % de la distance entre l'extrémité du retournement de la couche d'armature de carcasse et le point radialement le plus intérieur du cercle circonscrit à la tringle et de préférence comprise entre 15 et 35 % de la distance entre l'extrémité du retournement de la couche d'armature de carcasse et le point radialement le plus intérieur du cercle circonscrit à la tringle; la longueur de découplage étant la distance entre l'extrémité (8) du retournement de carcasse et le point D, qui est l'extrémité la plus radialement extérieure à la tringle de la zone de couplage, cette distance étant mesurée sur la droite passant par l'extrémité (8) du retournement de carcasse et le point D.

5. Pneumatique (1) selon l'une des revendications 2 à 4, dans lequel le retournement (7) de la couche d'armature de carcasse et la partie principale de la couche d'armature de carcasse (2) sont couplés sur une longueur comprise entre 25 et 40 % de la distance entre l'extrémité (8) du retournement (7) de la couche d'armature de carcasse et le point radialement le plus intérieur (A) du cercle circonscrit à la tringle (4).

6. Pneumatique (1) selon l'une des revendications 2 à 5, dans lequel, dans la zone de couplage, l'épaisseur de la première couche de mélange caoutchouteux (9) est sensiblement constante et comprise entre 0,8 et 5 mm et de préférence entre 2,5 et 3,5 mm.

7. Pneumatique (1) selon l'une quelconque des revendications précédentes, dans lequel l'extrémité radialement intérieure (13) de la deuxième couche de mélange caoutchouteux (11) est radialement comprise entre le point radialement le plus extérieur (B) du cercle circonscrit à la tringle (4) et le point radialement le plus intérieur (A) du cercle circonscrit à la tringle (4).

8. Pneumatique (1) selon l'une quelconque des revendications précédentes, dans lequel le module d'élasticité sous tension à 10 % d'allongement des couches de calandrage de la couche d'armature de carcasse(2) est compris entre 4 et 16 MPa et de préférence entre 8 et 12 MPa.

9. Pneumatique (1) selon l'une des revendications précédentes, dans lequel le module d'élasticité sous tension à 10 % d'allongement de la première couche de mélange caoutchouteux (9) est inférieur ou égal au module d'élasticité sous tension à 10 % d'allongement du calandrage de la couche d'armature de carcasse (2).

10. Pneumatique (1) selon l'une des revendications précédentes, dans lequel le module d'élasticité sous tension à 10 % d'allongement de la première couche de mélange caoutchouteux (9) est supérieur à 50 % du module d'élasticité sous tension à 10 % d'allongement du calandrage de la couche d'armature de carcasse (2) et de préférence est supérieur à 70 % du module d'élasticité sous tension à 10 % d'allongement du calandrage de la couche d'armature de carcasse (2).

11. Pneumatique (1) selon l'une des revendications précédentes, dans lequel le module d'élasticité sous tension à 10 % d'allongement de la deuxième couche de mélange caoutchouteux (11) est inférieur à 150 % du module d'élasticité sous tension à 10 % d'allongement du calandrage de la couche d'armature de carcasse (2).

12. Pneumatique (1) selon l'une quelconque des revendications précédentes, dans lequel, le module de communication (20) est constitué d'un transpondeur radiofréquence (30, 100) encapsulé dans une masse de gomme d'enrobage (22a, 22b) isolante électriquement.

13. Pneumatique (1) selon la revendication précédente, dans lequel le transpondeur radiofréquence (30, 100) comprenant une antenne rayonnante hélicoïdale (110, 112, 31) définissant un premier axe longitudinal (39), ledit premier axe longitudinal (39) est orienté circonférentiellement par rapport au repère du pneumatique.

14. Pneumatique (1) selon la revendication 13, dans lequel, l'antenne rayonnante comportant deux tronçons d'antennes hélicoïdales, (110, 112), une puce électronique (120) est connectée galvaniquement audits deux tronçons d'antennes hélicoïdales (110, 112).

15. Pneumatique (1) selon la revendication 13, dans lequel le transpondeur radiofréquence (30) du module de communication (20) comprend en plus une antenne primaire (34) connectée électriquement à une puce électronique (42), dans lequel l'antenne primaire (34) est couplée inductivement à l'antenne rayonnante (31), et dans lequel l'antenne rayonnante (31) est une antenne dipôle constituée d'un ressort hélicoïdal monobrin définissant ledit premier axe longitudinal (39).

## Patentansprüche

1. Reifen (1), welcher dazu bestimmt ist, auf einer hohlen Felge vom Typ "Steilschulterfelge" montiert zu werden, und eine radiale Karkassenbewehrung umfasst, die aus einer einzigen Karkassenbewehrungsschicht (2) besteht, die von Verstärkungselementen gebildet wird, die zwischen zwei Kalandrierschichten aus Kautschukmischung eingesetzt sind, wobei der Reifen (1) eine Scheitelbewehrung (5) umfasst, die ihrerseits radial von einem Laufstreifen (6) bedeckt ist, wobei der Laufstreifen (6) über zwei Seitenwände mit zwei Wülsten (3) verbunden ist, wobei die Schicht von Verstärkungselementen der Karkassenbewehrung (2) in jedem der Wülste (3) durch Umschlag um einen Wulstkern (4) verankert ist, um einen Hauptteil der Karkassenbewehrungsschicht (2), der sich von einem Wulstkern (4) zum anderen erstreckt, und einen umgeschlagenen Teil (7) der Karkassenbewehrungsschicht in jedem der Wülste (3) zu bilden, wobei der umgeschlagene Teil (7) der Karkassenbewehrungsschicht vom Hauptteil der Karkassenbewehrungsschicht (2) durch eine erste Schicht aus Kautschukmischung (9) getrennt ist, die sich radial vom Wulstkern (4) bis über das Ende (8) des umgeschlagenen Teils (7) der Karkassenbewehrungsschicht hinaus erstreckt, und wobei sich der umgeschlagene Teil (7) der Karkassenbewehrungsschicht axial außen in Kontakt mit einer zweiten Schicht aus Kautschukmischung (11) befindet, die sich ihrerseits wenigstens in Kontakt mit einer dritten Schicht aus Kautschukmischung (14) befindet, welche die Außenfläche des Reifens im Bereich des Wulstes (3) bildet, wobei die dritte Schicht aus Kautschukmischung (14) insbesondere dazu bestimmt ist, mit der Felge in Kontakt zu kommen, wobei sich die dritte Schicht aus Kautschukmischung (14) radial außen in Kontakt mit einer vierten Schicht aus Kautschukmischung (16) befindet, welche die Außenfläche der Seitenwand bildet, wobei in einem Meridianschnitt des Reifens (1):
- der Abstand zwischen dem Ende (8) des umgeschlagenen Teils (7) der Karkassenbewehrungsschicht und dem radial innersten Punkt (A) des dem Wulstkern (4) umbeschriebenen Kreises zwischen 45 und 90 % des Abstands zwischen dem axial äußersten Punkt (E) des Hauptteils der Karkassenbewehrungsschicht (2) und dem radial innersten Punkt (A) des dem Wulstkern (4) umbeschriebenen Kreises beträgt,
- der umgeschlagene Teil (7) der Karkassenbewehrungsschicht und der Hauptteil der Karkassenbewehrungsschicht (2) die einzigen Schichten von Verstärkungselementen, deren Bruchdehnung kleiner als 6 % ist, sind, die in einem Bereich der Seitenwand vorhanden sind, der wenigstens 90 % des Bereichs zwischen dem Ende (8) des umgeschlagenen Teils (7) der Karkassenbewehrungsschicht und dem radial äußersten Punkt (B) des Wulstkerns (4) bildet,
wobei der Reifen **dadurch gekennzeichnet ist, dass** ein Hochfrequenzkommunikationsmodul (20) im Wulst (3) an der Grenzfläche zwischen der zweiten (11) und der dritten (14) Schicht aus Kautschukmischung und radial außen bezüglich des radial äußersten Punktes (B) des Wulstkerns (4) in einem Abstand von mehr als 25 mm von diesem angeordnet ist.

2. Reifen (1) nach Anspruch 1, wobei der umgeschlagene Teil (7) der Karkassenbewehrungsschicht und der Hauptteil der Karkassenbewehrungsschicht (2) radial nach außen ab einem Punkt C des umgeschlagenen Teils (7) der Karkassenbewehrungsschicht gekoppelt sind, der sich in einem Abstand zwischen 30 und 55 % des Abstands zwischen dem Ende (8) des umgeschlagenen Teils (7) der Karkassenbewehrungsschicht und dem radial innersten Punkt (A) des dem Wulstkern (4) umbeschriebenen Kreises befindet, und wobei das Hochfrequenzkommunikationsmodul (20) radial außen jenseits des Punktes C angeordnet ist; wobei der Hauptteil der Karkassenbewehrungsschicht und der umgeschlagene Teil der Karkassenbewehrungsschicht als gekoppelt bezeichnet werden, falls die jeweiligen Verstärkungselemente des Hauptteils der Karkassenbewehrungsschicht und des umgeschlagenen Teils der Karkassenbewehrungsschicht auf einer Länge von mehr als 15 % des Abstands zwischen dem Ende des umgeschlagenen Teils der Karkassenbewehrungsschicht und dem radial innersten Punkt A des dem Wulstkern umbeschriebenen Kreises durch eine im Wesentlichen konstante Dicke aus Kautschukmischung, das heißt eine Dicke, die um nicht mehr als 0,5 mm variiert, von höchstens 5 mm getrennt sind.

3. Reifen (1) nach Anspruch 2, wobei ab dem Punkt C des umgeschlagenen Teils (7) der Karkassenbewehrungsschicht radial nach außen der umgeschlagene Teil (7) der Karkassenbewehrungsschicht und der Hauptteil der Karkassenbewehrungsschicht (2) auf einer Länge zwischen 15 und 65 % des Abstands zwischen dem Ende (8) des umgeschlagenen Teils (7) der Karkassenbewehrungsschicht und dem radial innersten Punkt A des dem Wulstkern (4) umbeschriebenen Kreises gekoppelt sind, um anschließend durch die erste Schicht aus Kautschukmischung (9) bis zum Ende (8) des umgeschlagenen Teils (7) der Karkassenbewehrungsschicht entkoppelt zu werden, und wobei das Hochfrequenzkommunikationsmodul (20) radial gegenüber dem Kopplungsbereich zwischen dem umgeschlagenen Teil (7) und dem Hauptteil der Karkassenbewehrungsschicht (2) angeordnet ist; wobei der Hauptteil der Karkassenbewehrungsschicht und der umgeschlagene Teil der Karkassenbewehrungsschicht als entkoppelt bezeichnet werden, falls radial außerhalb des Kopplungsbereichs die Dicke der Kautschukmischung, welche die jeweiligen Verstärkungselemente des Hauptteils der Karkassenbewehrungsschicht und des umgeschlagenen Teils der Karkassenbewehrungsschicht trennt, größer als diejenige des Kopplungsbereichs ist.

4. Reifen nach einem der Ansprüche 2 und 3, wobei die Entkopplungslänge zwischen 5 und 40 % des Abstands zwischen dem Ende des umgeschlagenen Teils der Karkassenbewehrungsschicht und dem radial innersten Punkt des dem Wulstkern umbeschriebenen Kreises und vorzugsweise zwischen 15 und 35 % des Abstands zwischen dem Ende des umgeschlagenen Teils der Karkassenbewehrungsschicht und dem radial innersten Punkt des dem Wulstkern umbeschriebenen Kreises beträgt; wobei die Entkopplungslänge der Abstand zwischen dem Ende (8) des Karkassenumschlags und dem Punkt D ist, welcher das bezüglich des Wulstkerns radial äußerste Ende des Kopplungsbereichs ist, wobei dieser Abstand auf der Geraden gemessen wird, die durch das Ende (8) des Karkassenumschlags und den Punkt D verläuft.

5. Reifen (1) nach einem der Ansprüche 2 bis 4, wobei der umgeschlagene Teil (7) der Karkassenbewehrungsschicht und der Hauptteil der Karkassenbewehrungsschicht (2) auf einer Länge zwischen 25 und 40 % des Abstands zwischen dem Ende (8) des umgeschlagenen Teils (7) der Karkassenbewehrungsschicht und dem radial innersten Punkt (A) des dem Wulstkern (4) umbeschriebenen Kreises gekoppelt sind.

6. Reifen (1) nach einem der Ansprüche 2 bis 5, wobei im Kopplungsbereich die Dicke der ersten Schicht aus Kautschukmischung (9) im Wesentlichen konstant ist und zwischen 0,8 und 5 mm und vorzugsweise zwischen 2,5 und 3,5 mm beträgt.

7. Reifen (1) nach einem der vorhergehenden Ansprüche, wobei sich das radial innere Ende (13) der zweiten Schicht aus Kautschukmischung (11) radial zwischen dem radial äußersten Punkt (B) des dem Wulstkern (4) umbeschriebenen Kreises und dem radial innersten Punkt (A) des dem Wulstkern (4) umbeschriebenen Kreises befindet.

8. Reifen (1) nach einem der vorhergehenden Ansprüche, wobei der Elastizitätsmodul unter Spannung bei 10 % Dehnung der Kalandrierschichten der Karkassenbewehrungsschicht (2) zwischen 4 und 16 MPa und vorzugsweise zwischen 8 und 12 MPa beträgt.

9. Reifen (1) nach einem der vorhergehenden Ansprüche, wobei der Elastizitätsmodul unter Spannung bei 10 % Dehnung der ersten Schicht aus Kautschukmischung (9) kleiner oder gleich dem Elastizitätsmodul unter Spannung bei 10 % Dehnung der Kalandrierung der Karkassenbewehrungsschicht (2) ist.

10. Reifen (1) nach einem der vorhergehenden Ansprüche, wobei der Elastizitätsmodul unter Spannung bei 10 % Dehnung der ersten Schicht aus Kautschukmischung (9) größer als 50 % des Elastizitätsmoduls unter Spannung bei 10 % Dehnung der Kalandrierung der Karkassenbewehrungsschicht (2) und vorzugsweise größer als 70 % des Elastizitätsmoduls unter Spannung bei 10 % Dehnung der Kalandrierung der Karkassenbewehrungsschicht (2) ist.

11. Reifen (1) nach einem der vorhergehenden Ansprüche, wobei der Elastizitätsmodul unter Spannung bei 10 % Dehnung der zweiten Schicht aus Kautschukmischung (11) kleiner als 150 % des Elastizitätsmoduls unter Spannung bei 10 % Dehnung der Kalandrierung der Karkassenbewehrungsschicht (2) ist.

12. Reifen (1) nach einem der vorhergehenden Ansprüche, wobei das Kommunikationsmodul (20) aus einem Hochfrequenz-Transponder (30, 100) besteht, der in eine Masse aus elektrisch isolierendem Umhüllungsgummi (22a, 22b) eingebettet ist.

13. Reifen (1) nach dem vorhergehenden Anspruch, wobei der Hochfrequenz-Transponder (30, 100) einen Wendelstrahler (110, 112, 31) umfasst, der eine erste Längsachse (39) definiert, wobei die erste Längsachse (39) bezüglich des Koordinatensystems des Reifens in Umfangsrichtung ausgerichtet ist.

14. Reifen (1) nach Anspruch 13, wobei der Strahler zwei spiralförmige Antennenabschnitte (110, 112) aufweist, wobei ein Mikrochip (120) mit den zwei spiralförmigen Antennenabschnitten (110, 112) galvanisch verbunden ist.

15. Reifen (1) nach Anspruch 13, wobei der Hochfrequenz-Transponder (30) des Kommunikationsmoduls (20) außerdem eine Primärantenne (34) umfasst, die mit einem Mikrochip (42) elektrisch verbunden ist, wobei die Primärantenne (34) mit dem Strahler (31) induktiv gekoppelt ist, und wobei der Strahler (31) eine Dipolantenne ist, die aus einer eingängigen Schraubenfeder besteht, welche die erste Längsachse (39) definiert.

## Claims

1. Tyre (1) intended to be mounted on a drop-centre rim "15° drop centre", comprising a radial carcass reinforcement, made up of a single carcass reinforcement layer (2) formed of reinforcing elements inserted between two skim layers of rubber compound, said tyre (1) comprising a crown reinforcement (5), itself radially capped by a tread (6), said tread (6) being connected to two beads (3) by two sidewalls, the layer of reinforcing elements of the carcass reinforcement (2) being anchored in each of the beads (3) by being turned up around a bead wire (4) to form a main part of the carcass reinforcement layer (2), extending from one bead wire (4) to the other, and a turn-up (7) of the carcass reinforcement layer in each of the beads (3), said turn-up (7) of the carcass reinforcement layer being separated from the main part of the carcass reinforcement layer (2) by a first layer of rubber compound (9) extending radially from the bead wire (4) to beyond the end (8) of the turn-up (7) of the carcass reinforcement layer, and said turn-up (7) of the carcass reinforcement layer being, axially towards the outside, in contact with a second layer of rubber compound (11), itself at least in contact with a third layer of rubber compound (14) that forms the exterior surface of the tyre in the region of the bead (3), said third layer of rubber compound (14) notably being intended to come into contact with the rim, said third layer of rubber compound being, radially towards the outside, in contact with a fourth layer of rubber compound (16) that forms the exterior surface of said sidewall in meridian section of said tyre (1):
- the distance between the end (8) of the turn-up (7) of the carcass reinforcement layer and the radially innermost point (A) of the circle circumscribed on the bead wire (4) is between 45 and 90% of the distance between the axially outermost point (E) of the main part of the carcass reinforcement layer (2) and the radially innermost point (A) of the circle circumscribed on the bead wire (4),
- the turn-up (7) of the carcass reinforcement layer and the main part of the carcass reinforcement layer (2) are the only layers of reinforcing elements of which the elongation at break is less than 6% that are present in a sidewall region making up at least 90% of the region comprised between the end (8) of the turn-up (7) of the carcass reinforcement layer and the radially outermost point (B) of the bead wire (4),
said tyre being **characterized in that**
- a radiofrequency communication module (20) is positioned in the bead (3) at the interface between the second (11) and third (14) layer of rubber compound and radially on the outside relative at a distance greater than 25 mm from the radially outermost point (B) of the bead wire (4).

2. Tyre (1) according to Claim 1, wherein the turn-up (7) of the carcass reinforcement layer and the main part of the carcass reinforcement layer (2) are coupled radially towards the outside starting from a point C on the turn-up (7) of the carcass reinforcement layer, which point is situated at a distance between 30 and 55% of the distance between the end (8) of the turn-up (7) of the carcass reinforcement layer and the radially innermost point (A) of the circle circumscribed on the bead wire (4), and wherein the radiofrequency communication module (20) is positioned radially on the outside beyond the point C, the main part of the carcass reinforcement layer and the turn-up of the carcass reinforcement layer being said to be coupled if the respective reinforcing elements of the main part of the carcass reinforcement layer and of the turn-up of the carcass reinforcement layer are separated by a thickness of rubber compound that is substantially constant and at most 5 mm along a length greater than 15% of the distance between the end of the turn-up of the carcass reinforcement layer and the radially innermost point A of the circle circumscribed on the bead wire.

3. Tyre (1) according to Claim 2, wherein, radially towards the outside, starting from said point C of the turn-up (7) of the carcass reinforcement layer, the turn-up (7) of the carcass reinforcement layer and the main part of the carcass reinforcement layer (2) are coupled along a length of between 15 and 65% of the distance between the end (8) of the turn-up (7) of the carcass reinforcement layer and the radially innermost point A of the circle circumscribed on the bead wire (4), and are then decoupled by the first layer of rubber compound (9) as far as the end (8) of the turn-up (7) of the carcass reinforcement layer, and wherein the radiofrequency communication module (20) is placed radially facing said region of coupling between the turn-up (7) and the main part of the carcass reinforcement (2), the main part of the carcass reinforcement layer and the turn-up of the carcass reinforcement layer being said to be decoupled if, radially on the outside of the coupling region, the thickness of rubber compound separating the respective reinforcing elements of the main part of the carcass reinforcement layer and of the turn-up of the carcass reinforcement layer is greater than that of the coupling region.

4. Tyre (1) according to one of Claims 2 and 3, wherein the decoupling length is between 5 and 40% of the distance between the end of the turn-up of the carcass reinforcement layer and the radially innermost point of the circle circumscribed on the bead wire, and is preferably between 15 and 35% of the distance between the end of the turn-up of the carcass reinforcement layer and the radially innermost point of the circle circumscribed on the bead wire, the decoupling length being the distance between the end (8) of the turn-up (7) of the carcass reinforcement layer and the point D which is the radially outermost point of the coupling region from the bead wire, that distance being measured on a straight line defined by the end (8) of the turn up of the carcass reinforcement layer and the point D.

5. Tyre (1) according to one of Claims 2 to 4, wherein the turn-up (7) of the carcass reinforcement layer and the main part of the carcass reinforcement layer (2) are coupled along a length of between 25 and 40% of the distance between the end (8) of the turn-up (7) of the carcass reinforcement layer and the radially innermost point (A) of the circle circumscribed on the bead wire (4).

6. Tyre (1) according to one of Claims 2 to 5, wherein, in the coupling region, the thickness of the first layer of rubber compound (9) is substantially constant and between 0.8 and 5 mm, and preferably between 2.5 and 3.5 mm.

7. Tyre (1) according to any one of the preceding claims, wherein the radially inner end (13) of the second layer of rubber compound (11) is radially comprised between the radially outermost point (B) of the circle circumscribed on the bead wire (4) and the radially innermost point (A) of the circle circumscribed on the bead wire (4).

8. Tyre (1) according to any one of the preceding claims, wherein the tensile elastic modulus at 10% elongation of the skim layers of the carcass reinforcement layer (2) is between 4 and 16 MPa and preferably between 8 and 12 MPa.

9. Tyre (1) according to one of the preceding claims, wherein the tensile elastic modulus at 10% elongation of the first layer of rubber compound (9) is less than or equal to the tensile elastic modulus at 10% elongation of the skim rubber of the carcass reinforcement layer (2).

10. Tyre (1) according to one of the preceding claims, wherein the tensile elastic modulus at 10% elongation of the first layer of rubber compound (9) is greater than 50% of the tensile elastic modulus at 10% elongation of the skim rubber of the carcass reinforcement layer (2) and preferably is greater than 70% of the tensile elastic modulus at 10% elongation of the skim rubber of the carcass reinforcement layer (2).

11. Tyre (1) according to one of the preceding claims, wherein the tensile elastic modulus at 10% elongation of the second layer of rubber compound (11) is less than 150% of the tensile elastic modulus at 10% elongation of the skim rubber of the carcass reinforcement layer (2).

12. Tyre (1) according to any one of the preceding claims, wherein the communication module (20) consists of a radiofrequency transponder (30,100) encapsulated in an electrically insulating encapsulating rubber mass (22a, 22b).

13. Tyre (1) according to the preceding claim, wherein the radiofrequency transponder (30, 100) comprising, a helical radiating antenna (110, 112, 31) defining a first longitudinal axis (39), said first longitudinal axis (39) is oriented circumferentially in regard of the tyre axis system.

14. Tyre (1) according to Claim 13, wherein the radiating antenna comprising two helical antenna segments (110, 112), an electronic chip (120) is galvanically connected to said two helical antenna segments (110,112).

15. Tyre (1) according to Claim 13, wherein the radiofrequency transponder (30) of the communication module (20) additionally comprises a primary antenna (34) electrically connected to an electronic chip (42), wherein the primary antenna (34) is inductively coupled to the radiating antenna (31), and wherein the radiating antenna (31) is a dipole antenna consisting of a single-strand helical spring defining said first longitudinal axis (39).
